(19) Europäisches Patentamt
European Patent Office
Office européen des brevets

(11) Veröffentlichungsnummer: **0 264 627 B1**

(12) **EUROPÄISCHE PATENTSCHRIFT**

(45) Veröffentlichungstag der Patentschrift: **13.01.93**

(51) Int. Cl.$^5$: **C08F 222/02**, C08F 8/12, C02F 5/10

(21) Anmeldenummer: **87113595.0**

(22) Anmeldetag: **17.09.87**

(54) **Geringfügig vernetzte, wasserlösliche Polymaleinsäure, Verfahren zu deren Herstellung und Verwendung.**

(30) Priorität: **19.09.86 DE 3631814**

(43) Veröffentlichungstag der Anmeldung:
**27.04.88 Patentblatt 88/17**

(45) Bekanntmachung des Hinweises auf die Patenterteilung:
**13.01.93 Patentblatt 93/02**

(84) Benannte Vertragsstaaten:
**BE CH DE ES FR GB IT LI NL**

(56) Entgegenhaltungen:
**EP-A- 0 068 847**
**EP-A- 0 190 104**
**AT-A- 351 767**
**US-A- 3 810 834**

(73) Patentinhaber: **BASF Aktiengesellschaft**
**Carl-Bosch-Strasse 38**
**W-6700 Ludwigshafen(DE)**

(72) Erfinder: **Denzinger, Walter**
**Wormser Landstrasse 65**
**W-6720 Speyer(DE)**
Erfinder: **Hartmann, Heinrich, Dr.**
**Weinheimer Strasse 46**
**W-6703 Limburgerhof(DE)**
Erfinder: **Goeckel, Ulrich, Dr.**
**Leipziger Strasse 6**
**W-6737 Boehl-Iggelheim(DE)**
Erfinder: **Richter, Felix, Dr.**
**Kaiserstrasse 15**
**W-6835 Bruehl(DE)**
Erfinder: **Raubenheimer, Hans-Juergen**
**Benzstrasse 6**
**W-6834 Ketsch(DE)**
Erfinder: **Winkler, Ekhard, Dr.**
**Pfalzring 74**
**W-6704 Mutterstadt(DE)**

EP 0 264 627 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Aus der GB-PS 1 024 725 ist ein Verfahren zur Herstellung von Polymaleinsäureanhydrid bekannt, bei dem man Maleinsäureanhydrid in inerten Lösemitteln, z.B. Dialkylethern, Tetrahydrofuran, Dioxan, Benzol oder chlorierten Kohlenwasserstoffen, wie Chloroform, in Gegenwart von organischen Percarbonaten oder Diacylperoxiden polymerisiert. Besonders bevorzugte Lösemittel sind Benzol und Chloroform. Als Polymerisationsinitiatoren werden beispielweise Diisopropylpercarbonat, Dibenzoylperoxid, Dicyclohexylpercarbonat in Mengen von 2 bis 40 Gew.%, bezogen auf Maleinsäureanhydrid, verwendet. Die so hergestellten Polymerisate enthalten erhebliche Mengen an nichtpolymerisiertem Maleinsäureanhydrid.

Nach dem Verfahren der GB-PS 1 411 063 erhält man Polymaleinsäureanhydrid durch Polymerisieren von Maleinsäureanhydrid in Xylol als Lösemittel, das bis zu 99 % ortho-Xylol enthält, wobei man als Polymerisationsinitiator Di-tert.-butylperoxid in einer Menge von 15 bis 40 Gew.%, bezogen auf Maleinsäureanhydrid, einsetzt. Auch die nach diesem Verfahren hergestellten Polymerisate enthalten beträchtliche Menge an nichtpolymerisiertem Maleinsäureanhydrid.

Aus der US-PS 3 810 834 ist bekannt, daß man hydrolysierte Polymaleinsäureanhydride mit einem Molekulargewicht von 300 bis 5000 vor der Hydrolyse oder wasserlöslichen Salzen von derartigen hydrolysierten Polymaleinsäureanhydriden bei der Wasserbehandlung einsetzt, wobei die Kesselsteinbildung vermindert und in vielen Fällen praktisch verhindert wird. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäureanhydrids nicht vollständig und die Abtrennung von nichtpolymerisiertem Maleinsäureanhydrid vom Polymerisat schwierig ist, enthalten die Polymaleinsäuren beträchtliche Mengen an Maleinsäure.

Aus der EP-A- 0 068 847 sind wasserquellbare Polymerisate bekannt, die durch Copolymerisieren von Maleinsäureanhydrid mit einem $C_1$- bis $C_4$-Alkylvinylether im Molverhältnis 1:1 in Gegenwart von etwa 1 bis 5 Mol-%, bezogen auf Alkylvinylether, an Divinylethern von aliphatischen Diolen als Vernetzer in Gegenwart von Radikale bildenden organischen Initiatoren hergestellt werden. Die Anhydridgruppen enthaltenden Copolymerisate werden mit Ammoniak, Aminen oder Alkalimetallbasen in wäßrigem Medium umgesetzt, wobei die Anhydridgruppen bei der Einwirkung von Ammoniak und Aminen partiell in Amidgruppen und Ammoniumcarboxylatgruppen umgewandelt werden, während bei der Behandlung mit Alkalimetallbasen eine Hydrolyse und Neutralisation der Anhydridgruppen des Copolymerisats stattfindet. Die Produkte sind in Wasser unlöslich, haben jedoch aufgrund ihres hohen Quellvermögens eine hohe Wasseraufnahmekapazität und werden daher z.B. als Superabsorber in Windein eingesetzt.

Der vorliegenden Erfindung liegt die Aufgabe zugrunde, wasserlösliche Polymaleinsäuren die eine breitere Molekulargewichtsverteilung als die bisher bekannten Polymaleinsäuren haben, und ein Verfahren zur Herstellung dieser Polymaleinsäuren zur Verfügung zu stellen, bei dem man Polymerisate erhält, deren Gehalt an freier Maleinsäure wesentlich unter dem Maleinsäuregehalt der bekannten Polymaleinsäuren liegt. Eine weitere Aufgabe der Erfindung ist es, Produkte für die Verminderung von Kesselsteinabscheidungen bzw. Wasserhärteausscheidungen in wasserführenden Systemen zur Verfügung zu stellen, die wirksamer sind als bisher verwendete Polymaleinsäuren.

Die Aufgaben werden erfindungsgemäß gelöst mit einer geringfügig vernetzten, wasserlöslichen Polymaleinsäure, die erhältlich ist durch Polymerisieren von Maleinsäureanhydrid mit 0.1 bis 10 Gew.%, bezogen auf Maleinsäureanhydrid, eines mindestens zwei nichtkonjugierte ethylenisch ungesättigte Doppelbindungen enthaltenden Vernetzers in einem aromatischen Kohlenwasserstoff bei einer Konzentration des Maleinsäureanhydrids von 20 bis 80 Gew.% bei Temperaturen von 60 bis 200 ° C in Abwesenheit von Wasser und in Gegenwart von 1 bis 20 Gew.%, bezogen auf Maleinsäureanhydrid, eines Peroxiesters, der sich von ungesättigten $C_1$- bis $C_{18}$-Carbonsäuren oder ethylenisch ungesättigten $C_3$- bis $C_{18}$-Carbonsäuren ableitet oder von tert.-Butyl-perbenzoat oder 2,5-Dimethylhexan-2,5-deperbenzoat und Hydrolysieren des Anhydridgruppen enthaltenden Polymerisats zu geringfügig vernetzter Polymaleinsäure mit einem K-Wert nach Fikentscher von 7 bis 20 (gemessen in wäßriger Lösung bei pH 7 als Natriumsalz und einer Polymerkonzentration von 5 Gew.%).

Eine weitere Lösung der Aufgaben besteht in einem Verfahren zur Herstellung von geringfügig vernetzter, wasserlöslicher Polymaleinsäure, bei dem man Maleinsäureanhydrid mit 0,1 bis 10 Gew.%, bezogen auf Maleinsäureanhydrid, eines mindestens zwei nichtkonjugierte ethylenisch ungesättigte Doppelbindungen enthaltenden Vernetzers in einem aromatischen Kohlenwasserstoff bei Temperaturen Von 60 bis 200 ° C in Gegenwart von 1 bis 20 Gew.-%, bezogen auf Maleinsäureanhydrid, eines Peroxiesters, der sich von gesättigten $C_1$-bis $C_{18}$-Carbonsäure oder ethylenisch ungesättigten $C_3$-bis $C_{18}$-Carbonsäuren ableitet oder von tert.-Butyl-perbenzoat oder 2,5-Dimethylhexan-2,5-diperbenzoat polymerisiert und das Polymerisat anschließend hydrolysiert.

Die geringfügig vernetzten, wasserlöslichen Polymaleinsäuren sind wirksame Mittel bei der Wasserbehandlung zur Verhinderung der Kesselsteinabscheidung oder Wasserhärterausscheidung in wasserführenden Systemen.

Die geringfügig vernetzten, wasserlöslichen Polymaleinsäuren werden durch Polymerisieren von Maleinsäureanhydrid in Gegenwart von 0,1 bis 10 Gew.%, bezogen auf Maleinsäureanhydrid, eines Vernetzers in einem aromatischen Kohlenwasserstoff oder in Mischungen solcher Kohlenwasserstoffe erhalten. Geeignete aromatische Kohlenwasserstoffe sind beispielsweise Benzol, Toluol, Xylol, Ethylbenzol, o-, m- und p-Diethylbenzol, Isopropylbenzol, n-Propylbenzol, p-Diisopropylbenzol und Tetralin. Die Isomeren des Xylols - o-, m- und p-Xylol - können entweder in reiner Form oder in Form der Mischungen eingesetzt werden, die als sogenanntes technisches Xylol im Handel erhältlich sind. Vorzugsweise verwendet man als aromatische Kohlenwasserstoffe Toluol und o-Xylol.

Als Vernetzer kommen solche Monomere in Betracht, die mindestens 2 ethylenisch ungesättigte Doppelbindungen, die nicht konjugiert sind, enthalten. Geeignete Vernetzer dieser Art sind beispielsweise Diacrylate oder Dimethacrylate von mindestens zweiwertigen gesättigten Alkoholen, z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandiolacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole bzw. Polypropylenglykole, die für die Herstellung der Diacrylate oder Dimethacrylate verwendet werden, haben vorzugsweise ein Molekulargewicht von jeweils 400 bis 2000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid-und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylatund/oder Tetraethylenglykoldimethacrylat. Als Vernetzer eignen sich außerdem Vinylester von ethylenisch ungesättigten $C_3$-$C_6$-Carbonsäuren, z.B. Vinylacrylat, Vinylmethacrylat oder Vinylitakonat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandioldivinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Pentaerithrittriallylether, Triallylsaccharose und Pentaallylsaccharose. Außerdem eignen sich als Vernetzer Methylenbisacrylamid, Methylenbismethacrylamid, Divinylethylenharnstoff, Divinylpropylenharnstoff, Divinylbenzol, Divinyldioxan, Tetraallylsilan und Tetravinylsilan.

Die Vernetzer können entweder allein oder in Form von Gemischen bei der Polymerisation des Maleinsäureanhydrids eingesetzt werden. Die Vernetzer werden vorzugsweise in einer Menge von 0,2 bis 5 Gew.%, bezogen auf Maleinsäureanhydrid, verwendet. Als Vernetzer werden Diacrylate oder Dimethacrylate bevorzugt, die sich von Polyethylenglykolen und/oder Polypropylenglykolen eines Molekulargewichts von 400 bis 2000 ableiten.

Als Polymerisationsinitiatoren verwendet man gemäß Erfindung Peroxiester, die sich formal von gesättigten oder ethylenisch ungesättigten Carbonsäuren ableiten. Die primären Ester der Persäuren werden im allgemeinen durch Umsetzung der Bariumsalze von primären Alkylhydroperoxiden mit Acylchloriden hergestellt, während die tertiären Alkylester der Persäuren durch gleichzeitige Zugabe von verdünnten Alkalien und Acylchlorid zu tert.-Alkylhydroperoxiden erhältlich sind. Der Carbonsäureteil des Peroxiestermoleküls leitet sich von gesättigten $C_1$-bis $C_{18}$-Carbonsäuren oder von ethylenisch ungesättigten $C_3$- bis $C_{18}$-Carbonsäuren ab, vorzugsweise von jeweils gesättigten oder ethylenisch ungesättigten Carbonsäuren mit 4 bis 10 Kohlenstoffatomen ab. Die in Betracht kommenden Peroxiester können vereinfachend mit Hilfe der folgenden Formeln dargestellt werden:

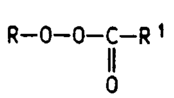 (I) bzw. 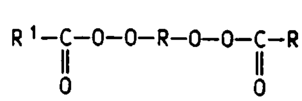 (II)

$R^1$ in den Formeln I und II bedeutet einen gesättigten $C_1$- bis $C_{17}$-Alkylrest, H oder einen ethylenisch

ungesättigten $C_2$- bis $C_{17}$-Alkenylrest, der gegebenen falls noch eine Carboxylgruppe tragen kann. Der Substituent R in Formel I steht für eine $C_3$- bis $C_{22}$-Alkylgruppe oder eine Alkylgruppe, die einen oder mehrere aromatische Substituenten aufweist, z.B. die Cumylgruppe, während R in Formel II eine Alkylengruppe bedeutet und in Formel I vorzugsweise für eine tert.-Butyl- oder tert.-Amylgruppe steht.

Beispiele für die in Betracht kommenden Alkyl- bzw. Aralkylperoxiester von Carbonsäuren sind Cumylperneodecanoat, tert.-Butyl-perneodecanoat, tert.-Amyl-perneodecanoat, tert.-Amyl-perpivalat, tert.-Butylperpivalat,tert.-Butyl-perneohexanoat, tert.-Butyl-perisobutyrat, tert.-Butyl-per-2-ethylhexanoat, tert.-Butyl-perisononanoat, tert.-Butyl-permaleinat, tert.-Butyl-perbenzoat, 2,5-Dimethylhexan-2,5-diperbenzoat und tert.-Butyl-per-3,5,5-trimethylhexanoat. Die genannten Alkylperester können entweder allein oder in Mischung bei der Polymerisation eingesetzt werden. Vorzugsweise verwendet man tert.-Butylperpivalat, tert.-Butyl-per-2-ethylhexanoat oder tert.-Butyl-perbenzoat als alleinige Initiatoren oder in Mischung untereinander bzw. auch Gemische aus diesen Peroxiestern zusammen mit anderen Alkylperoxiestern. Bezogen auf das bei der Polymerisation eingesetzte Maleinsäureanhydrid verwendet man 1 bis 20, vorzugsweise 5 bis 16 Gew.% der Peroxiester.

Die Herstellung der geringfügig vernetzten, wasserlöslichen Polymaleinsäure erfolgt in zwei Verfahrensstufen. In der ersten Verfahrensstufe wird Maleinsäureanhydrid in einem aromatischen Kohlenwasserstoff in Gegenwart von 0,1 bis 10 Gew.%, bezogen auf Maleinsäureanhydrid, eines mindestens 2 ethylenisch ungesättigte, nicht konjugierte Doppelbindungen enthaltenden Vernetzers in einem aromatischen Kohlenwasserstoff bei Temperaturen von 60 bis 200 ° C in Gegenwart der oben genannten Peroxiester polymerisiert. Die Konzentration des Maleinsäureanhydrids in der Lösung des aromatischen Kohlenwasserstoffs betragt 20 bis 80, vorzugsweise 30 bis 70 Gew.%, d.h. pro Gewichtsteil Maleinsäureanhydrid verwendet man 0,25 bis 4, vorzugsweise 0,43 bis 2,33 Gewichtsteile eines aromatischen Kohlenwasserstoffs. Die Polymerisation wird vorzugsweise in dem Temperaturbereich von 80 bis 150 ° C durchgeführt. Bei kleineren Ansätzen, bei denen die entstehende Polymerisationswärme leicht abgeführt werden kann, ist es möglich, eine Lösung von Maleinsäureanhydrid und Vernetzungsmittel im aromatischen Kohlenwasserstoff durch Zugabe eines Peroxiesters und Erhitzen auf eine Temperatur in dem angegebenen Bereich zu polymerisieren. Vorteilhafter ist es dagegen, eine Lösung von Maleinsäureanhydrid und Vernetzer in mindestens einem aromatischen Kohlenwasserstoff in einem Reaktor vorzulegen, auf die für die Polymerisation erforderliche Temperatur zu erwärmen und den Peroxiester gelöst in einem aromatischen Lösemittel oder einem inerten Lösemittel kontinuierlich oder portionsweise nach Fortschritt der Polymerisationsreaktion zuzudosieren. In einer anderen Verfahrensvariante erhitzt man den aromatischen Kohlenwasserstoff auf eine Temperatur in dem oben angegebenen Bereich und führt kontinuierlich oder absatzweise Maleinsäureanhydrid, Vernetzer und Polymerisationsinitiator in dem Maße zu, wie die Polymerisation abläuft.

Man kann die Polymerisation jedoch auch so durchführen, daß man einen Teil des zu polymerisierenden Gemisches, z.B. 5 bis 10 % des Gesamtansatzes, in einem Polymerisationsreaktor auf eine Temperatur in dem Bereich von 60 bis 200 ° C erwärmt, so daß die Polymerisation startet und dann den Rest der zu polymerisierenden Komponenten entweder in Form einer Mischung (Mischung aus Maleinsäureanhydrid, Vernetzer und Peroxiester, gelöst in einem aromatischen Kohlenwasserstoff) oder jeweils Lösungen von Maleinsäureanhydrid und Vernetzer bzw. Lösungen mindestens eines Peroxiesters in einem aromatischen Kohlenwasserstoff kontinuierlich oder absatzweise der auf die Polymerisationstemperatur erhitzten Vorlage zuführt. Die Polymerisation wird vorzugsweise unter Inertgasatmosphäre, z.B. unter Stickstoff, durchgeführt. Um die bei der Polymerisation entstehende Wärme abzuführen, ist es technisch am einfachsten, die Polymerisation beim Siedepunkt des aromatischen Kohlenwasserstoffs vorzunehmen, weil die Polymerisationswärme dann mit Hilfe einer Siedekühlung aus dem System entfernt werden kann. Der Einsatz von Mischungen mehrer aromatischer Kohlenwasserstoffe ermöglicht dabei die Einstellung der Polymerisationstemperaturen,Eine andere Möglichkeit, die Polymerisation bei der Siedetemperatur des gerade verwendeten aromatischen Kohlenwasserstoffs bzw. einer Mischung aromatischer Kohlenwasserstoffe durchzuführen, besteht darin, daß man je nach gewünschter Polymerisationstemperatur die Polymerisation unter vermindertem bzw. unter erhöhtem Druck durchführt. Neben den oben beschriebenen weitgehend diskontinuierlich ablaufenden Polymerisationen kann das Verfahren auch für die Herstellung größerer Mengen an geringfügig vernetztem, wasserlöslichem Polymaleinsäureanhydrid kontinuierlich durchgeführt werden. Für die kontinuierliche Polymerisation benötigt man in den meisten Fällen eine Kaskade von zwei oder mehreren hintereinander geschalteten Polymerisationsreaktoren. In die beiden ersten Reaktoren werden bei einer kontinuierlichen Verfahrensführung unterschiedlich zusammengesetzte Monomerzuläufe kontinuierlich zudosiert. Hierbei ist es auch möglich, die gesamten Monomeren dem ersten Reaktor zuzuführen und die erforderlichen Initiatormengen auf 2 oder 3 Reaktoren zu verteilen.

Um Polymerisate mit besonders niedrigem Restmonomerengehalt herzustellen, kann an die Hauptpolymerisation eine Nachpolymerisation angeschlossen werden, die entweder bei der Temperatur durchgeführt

wird, bei der auch die Hauptpolymerisation vorgenommen wurde oder man führt die Nachpolymerisation bei einer um 10 bis 40°C höheren Temperatur durch. Vorzugsweise verwendet man bei der Nachpolymerisation Peroxiester. Für die Haupt- und Nachpolymerisation benötigt man insgesamt 1 bis 20 Gew.% der Peroxiester. Bei der Hauptpolymerisation kann entweder die gesamte Menge an Peroxiester eingesetzt und dann die Nachpolymerisation durchgeführt werden oder man verwendet 80 bis 95 % der erforderlichen Initiatormenge bei der Hauptpolymerisation und gibt nach Abschluß der Hauptpolymerisation die restliche Initiatormenge zu und führt eine Nachpolymerisation durch.

Die Vernetzer polymerisieren unter den Reaktionsbedingungen praktisch vollständig. Der Umsatz von Maleinsäureanhydrid liegt oberhalb von 99 %, so daß man geringfügig vernetzte Polymerisate des Maleinsäureanhydrids erhält, die weniger als 1 Gew.% nicht polymerisiertes Maleinsäureanhydrid enthalten. Die Struktur der geringfügig vernetzten Polymerisate ist nicht bekannt. Aus der Mengenbilanz, der Elementaranalyse und aufgrund von IR-Spektren kann jedoch gesagt werden, daß das geringfügig vernetzte Polymerisat außer einpolymerisiertem Maleinsäureanhydrid und einpolymerisiertem Vernetzer noch den jeweils verwendeten aromatischen Kohlenwasserstoff und Zerfallsprodukte der Peroxiester in gebundener Form enthält. Bezogen auf Maleinsäure werden bis zu 75, vorzugsweise 10 bis 65 Gew.% an aromatischem Kohlenwasserstoff und an Zerfallsprodukten des Initiators in die geringfügig vernetzte Polymaleinsäure eingebaut, wenn man von einem 100%igen Umsatz des Maleinsäureanhydrids zu Polymaleinsäureanhydrid ausgeht. Bei der Polymerisation des Maleinsäureanhydrids in Gegenwart von 0,1 bis 10 Gew.% Vernetzern gemäß Erfindung erhält man je nach Auswahl des Lösemittels klare Polymerlösungen (z.B. in Ethylbenzol) oder Ausfällungen der Polymeren oder auch zwei getrennte Phasen, die jeweils Polymerisat enthalten, wobei die untere Phase bei Temperaturen oberhalb von 90 °C eine ölige Konsistenz aufweist und beim Abkühlen erstarrt. Die obere Phase besteht im wesentlichen aus einer Lösung (z.B. beim Polymerisieren in Xylol). Die Polymerisate, die in den beiden verschiedenen Phasen vorliegen, haben unterschiedliche anwendungstechnische Eigenschaften. Sie können jedoch beide gemeinsam für den selben Anwendungszweck verwendet werden, so daß eine Trennung der Polymerisate nicht erforderlich ist. Man kann jedoch auch eine Trennung bzw. Fraktionierung des Polymeransatzes vornehmen, wobei dann besonders wirksame Wasserbehandlungsmittel herstellbar sind. Die bei der Polymerisation nicht in das Polymerisat eingebauten aromatischen Kohlenwasserstoffe können zurückgewonnen und erneut - selbst ohne Reinigung - bei der Polymerisation wieder verwendet werden. Die Polymerisation des Maleinsäureanhydrids mit den Vernetzern wird in Abwesenheit von Wasser durchgeführt. Die bei der Polymerisation eingesetzten aromatischen Kohlenwasserstoffe sind praktisch wasserfrei bzw. enthalten bis höchstens 0,2 Gew.% Wasser, d.h. Mengen an Wasser, die bei Kontakt zwischen Wasser und aromatischen Kohlenwasserstoff darin gelöst sind.

In einem zweiten Verfahrensschritt werden die bei der Polymerisation hergestellten Produkte hydrolysiert. Hierfür kann man zur Herstellung von Polymerisaten in der Säureform Wasser zusetzen und zur Vervollständigung der Hydrolyse der Anhydridgruppen des vernetzten Polymerisats das Reaktionsgemisch auf eine Temperatur in dem Bereich von 70 bis 150 °C erhitzen. Sofern die Hydrolyse des Polymerisats bei Temperaturen durchgeführt wird, die oberhalb der Siedetemperaturen der Lösemittel-Wasser-Gemische liegen, führt man die Reaktion unter Druck durch. Der bei der Polymerisation eingesetzte aromatische Kohlenwasserstoff kann dabei vor oder auch nach der Hydrolyse von der entstehenden wäßrigen Polymerlösung abdestilliert werden. Die Polymerisate können jedoch auch aus dem bei der Polymerisation erhaltenen Reaktionsgemisch durch Zugabe eines Lösemittels, in dem sie nicht löslich sind, ausgefüllt und anschließend hydrolysiert werden.

Falls gewünscht, kann die wäßrige Lösung der geringfügig vernetzten Polymaleinsäure mit Alkali, Ammoniak oder Aminen neutralisiert werden. Zur Herstellung der Salze der geringfügig vernetzten Polymaleinsäure verfährt man jedoch vorzugsweise so, daß man das bei der Polymerisation erhaltene Reaktionsgemisch mit wäßrigen Lösungen einer Alkalimetallbase, Ammoniak oder eines Amins neutralisiert. Auch in diesen Fällen kann der aromatische Kohlenwasserstoff vor, während oder nach der Neutralisation abdestilliert oder wieder verwendet werden. Man erhält in allen Fällen wäßrige Lösungen von Salzen einer schwach vernetzten Polymaleinsäure. Als Alkalimetallbasen verwendet man vorzugsweise Natronlauge oder Kalilauge. Die Neutralisation kann außerdem mit Ammoniak oder Aminen, z.B. Triethylamin, Hexylamin, Ethanolamin, Triethanolamin oder Morpholin vorgenommen werden. Die Hydrolyse der Anhydridgruppen des geringfügig vernetzen Polymerisats kann jedoch außer mit Wasser auch mit Hilfe von wäßrigen Lösungen von Basen oder Säuren vorgenommen werden. Sofern die geringfügig vernetzten Polymerisate der Maleinsäure in der Säureform nicht in Wasser löslich sind, werden sie durch Neutralisieren mit einer Base in das Alkalisalz überführt, das dann wasserlöslich ist.

Der K-Wert der geringfügig vernetzten, wasserlöslichen Polymaleinsäuren betragt 7 bis 20 und liegt vorzugsweise in dem Bereich von 8,5 bis 15 (bestimmt als Natriumsalz in 5%iger wäßriger Losung bei 25 °C und pH 7). Die geringfügig vernetzten, wasserlöslichen Polymaleinsäuren enthalten weniger als 1

Gew.-% monomerer Maleinsäure (polarographisch bestimmt). Die wäßrigen Lösungen der hydrolysierten Polymerisate können daher ohne weitere Reinigung direkt verwendet werden, um Kesselsteinabscheidung bzw. Wasserhärterausscheidung in wasserführenden System zu vermindern bzw. zu unterbinden.

Die Wirkungsweise dieser sog. Belagsverhinderer besteht darin, die Bildung von Kristallen der Härtebildnersalze, wie Calciumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese Weise werden die Oberflächen von z.B. Wärmeaustauschern, Rohren oder Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Microorganismen auf diese Metalloberflächen erschwert. Durch den Einfluß dieser Belagsverhinderer kann so die Lebensdauer von solchen Anlagen erhöht und Stillstandszeiten zur Reinigung von Anlagenteilen erheblich reduziert werden. Die hierzu benötigten Mengen von Belagsverhinderer betragen nur 0,1 bis 100 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Warme abgeführt werden muß. Der Einsatz dieser Belagsverhinderer kann auch in Boilerwässern und Dampferzeugern, vorzugsweise im Bereich von Wassertemperaturen unterhalb 150°C erfolgen. Eine bevorzugte Anwendung der erfindungsgemäßen Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MSF-Destillationsverfahren zur Meerwasserentsalzung eingedicktes Meerwasser mit erhöhter Temperatur im Umlauf gefahren. Die erfindungsgemäßen Belagsverhinderer unterbinden wirksam die Ausscheidung von Härtebildnern, wie z.B. Brucit und deren Anbacken an Anlagenbauteile.

Bei Membranverfahren kann die Schädigung der Membranen durch auskristallisierende Härtebildner wirksam verhindert werden. Auf diese Weise ermöglichen diese Belagsverhinderer höhere Eindickungsfaktoren, verbesserte Ausbeute an Reinwasser und längere Lebensdauer der Membranen. Eine weitere Anwendung dieser Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calciumhydroxid, Kohlendioxid, Schwefeldioxid oder gegebenenfalls Phosphorsäure zugesetzt. Nach Filtration im Zuckersaft verbleibende schwerlöslische Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückstanden der Zuckerproduktion.

Die erfindungsgemäßen Belagsverhinderer sind in der Lage, diese Belagsbildung weitgehend zu unterbinden, so daß Stillstandszeiten der Anlage zur Reinigung, z.B. durch Auskochen, wesentlich verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die hydrolysierten vernetzten Polymerisate der Maleinsäure können außerdem als Inkrustations- und Vergrauungsinhibitoren in einer Menge von 0,5 bis 10 Gew.-% in Waschmittelformulierungen eingearbeitet werden. Die schwach vernetzten wasserlöslichen Polymaleinsäuren kommen auch als Wasserhärtestabilisatoren in Reinigungsmittelformulierungen in Betracht. Sie eignen sich außerdem in einer Menge von 0,1 bis 5 Gew.-% als Dispergiermittel für Pigmente, z.B. zur Herstellung von wäßrigen hochkonzentrierten Anschlämmungen von Clay oder Kreide für die Bereitung von Papierstreichmassen.

Die in den Beispielen angegebenen Teile sind Gewichtsteile. Die Angaben in Prozent beziehen sich auf das Gewicht der Stoffe. Die K-Werte der hydrolysierten Polymerisate wurden nach H. Fikentscher, Cellulose-Chemie, Band 13, 48-64 und 71-74 (1932) in wäßriger Lösung bei einem pH-Wert von 7, einer Temperatur von 25°C und einer Polymerkonzentration des Natriumsalzes des Polymerisats von 5 Gew.-% bestimmt.

Beispiel 1

In einem 2 l fassenden Glasreaktor, der mit Rührer, Thermometer, Stickstoffeinleitung, Kühler, Zulaufgefäßen und einer Vorrichtung für das Einleiten von Wasserdampf versehen ist, wird eine Losung von 400 g Maleinsäureanhydrid und 8 g Butandioldiacrylat in 600 g o-Xylol auf eine Temperatur von 146 ° C (Rückflußsieden) erhitzt. Sobald die Lösung zu sieden beginnt, dosiert man innerhalb von 5 Stunden eine Lösung von 60 g tert.-Butyl-per-2-ethylhexanoat in 100 g o-Xylol zu. Die Polymerisation wird unter guter Durchmischung beim Rückflußsieden durchgeführt. Die Temperatur sinkt im Verlaufe der Polymerisation von 146 auf 140 ° C. Nach Abschluß der Initiatorzugabe wird das Reaktionsgemisch noch eine Stunde zum Sieden erhitzt, danach auf 97 ° C abgekühlt und durch Zugabe von 300 g Wasser hydrolysiert. Man leitet dann Wasserdampf in das Reaktionsgemisch und entfernt das nicht umgesetzte o-Xylol azeotrop. Es verbleibt eine klare gelbe wäßrige Lösung mit einem Feststoffgehalt von 61 %. Die geringfügig vernetzte Polymaleinsäure hat in Form des Natriumsalzes einen K-Wert von 9,7. Der Restmonomerengehalt, bezogen auf den Feststoffgehalt, beträgt 0,16 % Maleinsäure. Die Ausbeute an geringfügig vernetzter Polymaleinsäure beträgt 129 %, bezogen auf Maleinsäure, deren Menge sich aus dem eingesetzten Maleinsäureanhydrid errechnet.

Beispiel 2

Beispiel 1 wird mit der Ausnahme wiederholt, daß man die Menge des Vernetzers auf 20 g erhöht. Man erhält eine braun gefärbte fast klare wäßrige Lösung mit einem Feststoffgehalt von 64,5 %. Die geringfügig vernetzte Polymaleinsäure hat in Form des Natriumsalzes einen K-Wert von 10,3. Der Restmonomerengehalt, bezogen auf den Feststoffgehalt, beträgt 0,36 % Maleinsäure. Die Ausbeute an geringfügig vernetzter Polymaleinsäure betragt 132 %, bezogen auf Maleinsäure, deren Menge sich aus dem eingesetzten Maleinsäureanhydrid errechnet.

Beispiel 3

Beispiel 1 wird mit der Ausnahme wiederholt, daß man anstelle der dort eingesetzten Vernetzermenge nunmehr 40 g Butandioldiacrylat einsetzt. Man erhält eine braun gefärbte trüb aussehende wäßrige Lösung mit einem Feststoffgehalt von 58,4 %. Die geringfügig vernetzte Polymaleinsäure hat in Form des Natriumsalzes einen K-Wert von 11,9. Der Restmonomerengehalt, bezogen auf den Feststoffgehalt, betragt 0,45 % Maleinsäure. Die Ausbeute an geringfügig vernetzter, wasserlöslicher Polymaleinsäure beträgt 134 %, bezogen auf Maleinsäure, deren Menge sich aus dem eingesetzten Maleinsäureanhydrid ergibt.

Beispiel 4

In der in Beispiel 1 beschriebenen Apparatur wird eine Lösung von 400 g Maleinsäureanhydrid und 20 g eines Diacrylats aus einem Polyethylenglykol mit einem Molekulargewicht von 1500 in 600 g o-Xylol zum Sieden erhitzt und unter Stickstoffatmosphäre und Rühren innerhalb von 5 Stunden mit einer Lösung von 60 g tert.-Butyl-per-2-ethylhexanoat in 100 g o-Xylol versetzt. Nach Abschluß der Initiatorzugabe wird das Reaktionsgemisch noch eine Stunde zur Nachpolymerisation zum Sieden erhitzt und dann auf 95 ° C abgekühlt. Bei dieser Temperatur setzt man dann 300 g Wasser hinzu, entfernt das nicht miteinpolymerisierte o-Xylol durch Einleiten von Wasserdampf. Es verbleibt eine braun gefärbte wäßrige Lösung mit einem Feststoffgehalt von 60 %. Die geringfügig vernetzte Polymaleinsäure hat in Form des Natriumsalzes einen K-Wert von 10,1 . Der Restmonomerengehalt, bezogen auf den Feststoffgehalt, beträgt 0,17 % Maleinsäure. Die Ausbeute an geringfügig vernetzter Polymaleinsäure beträgt 128 %, bezogen auf Maleinsäure, deren Menge sich aus dem eingesetzten Maleinsäureanhydrid errechnet.

Beispiel 5

Das Beispiel 4 wird mit der Ausnahme wiederholt, daß man die Menge des Vernetzers auf 40 g erhöht. Als Vernetzer wird hier wiederum das Diacrylat eines Polyethylenglykols vom Molekulargewicht 1500 verwendet. Man erhält eine braun gefärbte wäßrige Lösung einer geringfügig vernetzten Polymaleinsäure. Der Feststoffgehalt der wäßrigen Lösung beträgt 56,9 %. Die geringfügig vernetzte Polymaleinsäure hat in Form des Natriumsalzes einen K-Wert von 10,7. Der Restmonomerengehalt, bezogen auf den Feststoffgehalt, beträgt 0,19 % Maleinsäure. Die Ausbeute an geringfügig vernetzter Polymaleinsäure beträgt 132 %, bezogen auf Maleinsäure, deren Menge sich aus dem bei der Polymerisation eingesetzten Maleinsäureanhydrid errechnet.

Vergleichsbeispiel 1

In dem in Beispiel 4 angegebenen Polymerisationsreaktor wird eine Lösung von 300 g Maleinsäureanhydrid in 300 g technischem Xylol unter Rühren zum Sieden unter Rückfluß erhitzt. Sobald die Lösung zu Sieden beginnt, fügt man innerhalb von 2 Stunden kontinuierlich eine Lösung von 100 g Di-tert.-butylperoxid, gelöst in 150 g technischem Xylol zu. Mit fortschreitender Polymerisation fällt der Siedepunkt des Reaktionsgemisches von 136 bis auf 125 ° C ab. Nach Beendigung der Initiatorzugabe wird das Reaktionsgemisch noch 4 Stunden bei 125 ° C nachpolymerisiert, danach auf 95 ° C abgekühlt und durch Zugabe von 300 g Wasser hydrolysiert. Die als Lösemittel verwendeten aromatischen Kohlenwasserstoffe, die nicht in das Polymere eingebaut worden sind, werden durch Einleiten von Wasserdampf azeotrop entfernt. Man erhält eine klare braune wäßrige Lösung von Polymaleinsäure mit einem Feststoffgehalt von 48,7 %. Die Polymaleinsäure hat einen K-Wert in Form des Natriumsalzes von 10,1. Der Gehalt an nichtpolymerisierter Maleinsäure beträgt, bezogen auf Feststoffe in der wäßrigen Lösung, 4,1 %.

Vergleichsbeispiel 2

Das Vergleichsbeispiel 1 wird mit der Ausnahme wiederholt, daß man anstelle der dort verwendeten Initiatorlösung nunmehr eine Lösung von 45 g Di-tert.-butylperoxid in 150 g technischem Xylol einsetzt. Hierbei resultiert eine tiefbraun gefärbte klare wäßrige Lösung, die, bezogen auf den Feststoffgehalt, 86 % nicht polymerisierter Maleinsäure enthält.

Vergleichsbeispiel 3

In der im Beispiel 4 angegebenen Apparatur polymerisiert man eine Lösung von 300 g Maleinsäureanhydrid in 300 g o-Xylol. Die Maleinsäureanhydrid-Lösungin Xylol wird zum Sieden erhitzt und beim Siedepunkt im Verlauf von 2 Stunden mit einer Lösung von 100 g Di-tert.-Butylperoxid in 150 g o-Xylol kontinuierlich versetzt. Der Siedepunkt des Reaktionsgemisches fällt dabei mit fortschreitender Polymerisation von 146 auf 127 ° C ab. Nach Beendigung des Initiatorzulaufs wird das Reaktionsgemisch noch 4 Stunden zum Sieden unter Rückfluß erhitzt, danach auf 95 ° C abgekühlt und mit 300 g Wasser zur Hydrolyse versetzt. Das als Lösemittel verwendete o-Xylol wird dann mit Hilfe einer Wasserdampfdestillation entfernt. Man erhält eine klare braune wäßrige Lösung von Polymaleinsäure mit einem Feststoffgehalt von 62,4 %. Der Restmonomerengehalt beträgt, bezogen auf Feststoff, 18,5 %.

Vergleichsbeispiel 4

In einem 4 l-fassenden Reaktor, der mit Rührer, Thermometer, Stickstoffeinleitung, Kühler, Zulaufgefäß und einer Vorrichtung für das Einleiten von Wasserdampf versehen ist, wird eine Lösung von 877 g Maleinsäureanhydrid in 877 g technischem Xylol zum Sieden unter Rückfluß erhitzt. Sobald die Lösung zu Sieden beginnt, wird sie unter Stickstoffatmosphäre und ständigem Rühren innerhalb von 2 Stunden kontinuierlich mit einer Lösung von 292 g tert.-Butylhydroperoxid in 350 g technischem Xylol versetzt. Nach Beendigung der Initiatorzugabe wird das Gemisch noch 4 Stunden zum Sieden erhitzt, dann auf 96 ° C abgekühlt, mit 600 g Wasser versetzt und anschließend einer Wasserdampfdestillation unterworfen, um das technische Xylol zu entfernen. Es resultiert eine klare braungefärbte wäßrige Lösung mit einem Feststoffgehalt von 55,9 %. Der Gehalt an nichtpolymerisierter Maleinsäure beträgt, bezogen auf Feststoffe, 10,5 %.

Vergleichsbeispiel 5

In der im Beispiel 1 beschriebenen Apparatur wird eine Lösung von 100 g Maleinsäureanhydrid in 100 g technischem Xylol unter Stickstoff und Rühren zum Sieden erhitzt und innerhalb von 2 Stunden kontinuierlich mit einer Lösung von 15 g tert.-Butylhydroperoxid in 50 g technischem Xylol versetzt. Nach Abschluß der Initiatorzugabe wird das Reaktionsgemisch noch 4 Stunden zum Sieden erhitzt, dann auf 94 ° C abgekühlt, mit 50 g Wasser versetzt und einer Wasserdampfdestillation unterworfen. Man erhält eine klare braungefärbte Lösung mit einem Feststoffgehalt von 56,5 %. Der Gehalt an nichtpolymerisierter Maleinsäure beträgt, bezogen auf den Feststoffgehalt, 34,2 %.

Vergleichsbeispiel 6

Das Vergleichsbeispiel 5 wird mit der Ausnahme wiederholt, daß man anstelle der dort eingesetzten Initiatorlösung nunmehr eine Lösung von 15 g Dicumylperoxid in 50 g technischem Xylol verwendet. Man erhält eine klare braungefärbte wäßrige Lösung mit einem Feststoffgehalt von 54,3 %. Der Gehalt an

Maleinsäure in der Polymerlösung beträgt, bezogen auf Feststoffe, 30 %.

Vergleichsbeispiel 7

In der im Beispiel 4 beschriebenen Apparatur wird eine Lösung von 400 g Maleinsäureanhydrid in 600 g o-Xylol vorgelegt und unter Rühren in einem Stickstoffstrom zum Sieden erhitzt. Sobald die Lösung zu sieden beginnt, dosiert man innerhalb von 5 Stunden kontinuierlich eine Lösung von 60 g Dilauroylperoxid in 200 g o-Xylol zu. Nach Abschluß der Initiatorzugabe wird das Reaktionsgemisch noch 1 Stunde zum Sieden erhitzt, dann auf 95 °C abgekühlt und zur Hydrolyse des Polymerisates mit 300 g Wasser versetzt. Das nicht umgesetzte o-Xylol wird mit Hilfe einer Wasserdampfdestillation entfernt. Es resultiert eine klare gelbgefärbte wäßrige Lösung mit einem Feststoffgehalt von 51 %. Die wäßrige Lösung enthält, bezogen auf Feststoffe, 23 % Maleinsäure.

Vergleichsbeispiel 8

In der im Vergleichsbeispiel 5 beschriebenen Apparatur wird eine Lösung von 100 g Maleinsäureanhydrid in 233 g technischem Xylol unter Stickstoff und guter Durchmischung zum Sieden erhitzt und beim Sieden innerhalb von 2 Stunden mit einer Lösung von 7,5 g 2,2'-Azobisisobutyronitril in 50 g technischem Xylol versetzt. Die Polymerisation wird beim Siedepunkt des Reaktionsgemisches durchgeführt. Das Reaktionsgemisch wird nach Beendigung der Initiatorzugabe noch 4 Stunden zum Sieden erhitzt, dann auf 97 °C abgekühlt, mit 50 g Wasser versetzt und einer Wasserdampfdestillation unterworfen. Es resultiert eine klare rotbraun gefärbte wäßrige Lösung mit einem Feststoffgehalt von 54,2 %. Die wäßrige Polymerlösung enthält, bezogen auf Feststoffe, 13,3 % Maleinsäure.

Vergleichsbeispiel 9

Das Vergleichsbeispiel 8 wird mit der Ausnahme wiederholt, daß man als Polymerisationsinitiator eine Lösung von 7,5 g 2,2'-Azobis(2,4-dimethylvaleronitril) in 50 g technischem Xylol verwendet. Man erhält eine klare rotbraun gefärbte wäßrige Polymerlösung, mit einem Feststoffgehalt von 56,3 %. Der Gehalt an Maleinsäure beträgt, bezogen auf Feststoffe, 42,9 %.

Vergleichsbeispiel 10

Das Vergleichsbeispiel 7 wird mit der Ausnahme wiederholt, daß man anstelle der dort beschriebenen Initiatorlösung eine Initiatorlösung von 60 g Methylethylketonperoxid in 100 g o-Xylol einsetzt. Man erhält hierbei eine schwarzbraun gefärbte wäßrige Lösung mit einem Feststoffgehalt von 53,1 %. Die wäßrige Lösung enthält, bezogen auf Feststoffe, 78,4 % Maleinsäure.

Die Vergleichsbeispiele zeigen deutlich, daß man mit den bisher für die Polymerisation von Maleinsäureanhydrid beschriebenen Polymerisationsinitiatoren Polymerisate mit hohem Restmonomerengehalt erhält. Der Restmonomerengehalt der wäßrigen Polymerlösungen, die gemäß den Vergleichsbeispielen 2 bis 10 erhalten wurden, war so hoch, daß eine Bestimmung des K-Wertes nicht möglich war. Die Vergleichsbeispiele zeigen aber auch außerdem, daß erhebliche Mengen an Di-tert.-butylperoxid für die Polymerisation von Maleinsäureanhydrid erforderlich sind, um überhaupt einen einigermaßen befriedigenden Umsatz bei der Polymerisation zu erzielen. Demgegenüber wird mit den Peroxiestern gemäß der vorliegenden Erfindung bei der Polymerisation von Maleinsäureanhydrid in Gegenwart von Vernetzern ein Umsatz erzielt, der oberhalb von 99 % liegt. Der Gehalt an Maleinsäure in den hydrolysierten Produkten betrug in allen Fällen weniger als 1 %. Die hohen Umsätze bei dem erfindungsgemäßen Verfahren bzw. der geringe Gehalt an Maleinsäure in den hydrolysierten geringfügig vernetzten Polymerisaten wird gegenüber dem bekannten Stand der Technik überraschenderweise mit einer geringeren Menge an Initiator erreicht.

Anwendungstechnische Beispiele

Testmethoden

$CaCO_3$-Inhibierung dynamisch

Dieser Test simuliert die Belagsbildung von Calciumcarbonat in einem Kühlkreislauf. Bei dieser Untersuchungsmethode wird Testwasser mit 30 °d Ca-Härte, 10 °d Mg-Härte und 56 °d Carbonathärte

während 2 h durch eine auf 75 °C erhitzte Glasspirale gepumpt (Flußrate 0,5 l/h). Der in der Spirale gebildete Belag wird herausgelöst und Ca + Mg komplexometrisch bestimmt. Die Inhibitorwirkung errechnet sich aus der Belagsmenge im Blindversuch und bei Anwesenheit der entsprechenden Mengen des Belagsverhinderers.

Ca-Phosphat-Dispergierung

Mit diesem Test kann die dispergierte Wirkung auf ausgefallene Niederschläge ermittelt werden. Hierbei wird Testwasser mit 500 ppm Calciumphosphat-Niederschlag bei pH 8,5-9 1 h bei 100 °C gehalten und anschließend in einen Standzylinder überführt. Nach 1 h wird der Ca-Gehalt in der Mitte des Standzylinders komplexometrisch ermittelt. Die Dispergierwirkung errechnet sich aus der Menge von dispergiertem Calciumphosphat im Blindversuch und bei Anwesenheit des Dispergiermittels.

Screening-Test Meerwasserentsalzung

Synthetisches Meerwasser (200 ml) nach DIN 50 900 (1960), mit einer Anfangssalzkonzentration von 6,15 % wird bei 95 °C eingedampft, bis eine Trübung sichtbar wird. Das erhaltene Volumen ist ein Maß für die Wirksamkeit des Belagsverhinderers.

Beispiele 6 bis 8

Gemäß den oben beschriebenen Testmethoden wird für die aus der Tabelle ersichtlichen schwach vernetzten Polymaleinsäuren die Calciumcarbonatinhibierung (dynamisch), die Calciumphosphatdispergierung und die Wirksamkeit bei der Meerwassereindampfung bestimmt. Zum Vergleich damit werden die Eigenschaften der Polymaleinsäure bestimmt, die gemäß Vergleichsbeispiel 1 erhalten wurde. Die dafür ermittelten Werte sind ebenfalls in der Tabelle angegeben.

Tabelle

| Beispiel | geringfügig vernetzte Polymaleinsäure gemäß Beispiel | $CaCO_3$-Inhibierung (dynamisch) % bei 2 ppm Polymerzusatz | Ca-Phosphat-Dispergierung % bei 30 ppm Polymerzusatz | 45 | 60 | Meerwassereindampfung (Volumen in ml, bei dem Trübung eintritt) |
|---|---|---|---|---|---|---|
| 6 | 1 | 82,2 | 90,2 | 98,4 | 99,2 | 108 |
| 7 | 2 | 88,3 | 56,3 | 95,6 | 96 | 104 |
| 8 | 4 | 83,3 | 76,5 | 97,2 | 97,2 | 102 |
| Vergleichsbeispiel | Polymaleinsäure gemäß Vergleichsbeispiel | | | | | |
| 11 | 1 | 68,5 | 2,1 | 55,0 | 62,9 | 129 |

## Patentansprüche

1. Geringfügig vernetzte, wasserlösliche Polymaleinsäure, die erhältlich ist durch Polymerisieren von Maleinsäureanhydrid mit 0,1 bis 10 Gew.-%, bezogen auf Maleinsäureanhydrid, eines mindestens zwei nichtkonjugierte ethylenisch ungesättigte Doppelbindungen enthaltenden Vernetzers in einen aromatischen Kohlenwasserstoff bei einer Konzentration des Maleinsäureanhydrids von 20 bis 80 Gew.% bei Temperaturen von 60 bis 200 ° C in Abwesenheit von Wasser und in Gegenwart von 1 bis 20 Gew.%, bezogen auf Maleinsäureanhydrid, eines Peroxiesters, der sich von gesättigten $C_1$- bis $C_{18}$-Carbonsäuren oder ethylenisch ungesättigten $C_3$- bis $C_{18}$-Carbonsäuren ableitet oder von tert.-Butyl-perbenzoat oder 2,5-Dimethylhexan-2,5-diperbenzoat und Hydrolysieren des Anhydridgruppen enthaltenden Polymerisats zu geringfügig vernetzter Polymaleinsäure mit einem K-Wert nach Fikentscher von 7 bis 20 (gemessen bei 25 ° C in wäßriger Lösung bei pH 7 als Na-Salz und einer Polymerkonzentration von 5 Gew.%).

**2.** Verfahren zur Herstellung von geringfügig vernetzter, wasserlöslicher Polymaleinsäure, dadurch gekennzeichnet, daß man Maleinsäureanhydrid mit 0,1 bis 10 (Gew.%, bezogen auf Maieinsäureanhydrid, eines mindestens zwei nichtkonjugierte ethylenisch ungesättigte Doppelbindungen enthaltenden Vernetzers in einem aromatischen Kohlenwasserstoff bei einer Konzentration des Maleinsäureanhydrids von 20 bis 80 Gew.% bei Temperaturen von 60 bis 200 ° C in Abwesenheit von Wasser und in Gegenwart von 1 bis 20 Gew.%, bezogen auf Maleinsäureanhydrid, eines Peroxiesters, der sich von gesättigten $C_1$- bis $C_{18}$-Carbonsäuren oder ethylenisch ungesättigten $C_3$- bis $C_{18}$-Carbonsäuren ableitet oder von tert.-Butyl-perbenzoat oder 2,5-Dimethylhexan-2,5-diperbenzoat polymerisiert und das Polymerisat anschließend hydrolysiert.

**3.** Verfahren nach Anspruch 2, dadurch gekennzeichnet, daß man die Polymerisation in Benzol, Toluol, Xylol, Ethylbenzol, Diethylbenzol, Isopropylbenzol, Diisopropylbenzol oder deren Mischungen bei Temperaturen von 80 bis 150 ° C in Gegenwart von Peroxiestern durchführt, die sich von gesättigten $C_4$- bis $C_{10}$-Carbonsäuren ableiten.

**4.** Verfahren nach den Ansprüchen 2 und 3, dadurch gekennzeichnet, daß man die Polymerisationsinitiatoren in einer Menge von 5 bis 16 Gew.-% bezogen auf Maleinsäureanhydrid, einsetzt.

**5.** Verfahren nach den Ansprüchen 2 bis 4, dadurch gekennzeichnet, daß man als Vernetzer Diacrylate oder Dimethacrylate von mindestens 2-wertigen gesättigten Alkoholen, Diacrylate oder Dimethacrylate von Polyethylenglykolen oder Polypropylenglykolen mit Molekulargewichten von jeweils 200 bis 9000, Vinylester von ethylenisch ungesättigten $C_3$- bis $C_6$-Carbonsäuren, Vinylester von mindestens 2 Carboxylgruppen enthaltenden gesättigten Carbonsäuren, Di- und Polyvinylether von mindestens 2-wertigen Alkoholen, Allylester ethylenisch ungesättigter Carbonsäuren, Allylether von mehrwertigen Alkoholen, Methylenbisacrylamid, Methylenbismethacrylamid, Divinylethylenharnstoff, Divinylpropylenharnstoff, Divinylbenzol, Divinyldioxan oder deren Mischungen einsetzt.

**6.** Verfahren nach Anspruch 5, dadurch gekennzeichnet, daß man als Vernetzer Diacrylate oder Dimethacrylate von 2-wertigen gesättigten Alkoholen einsetzt.

**7.** Verfahren nach Anspruch 5, dadurch gekennzeichnet, daß man als Vernetzer Diacrylate oder Dimethacrylate von Polyethylenglykolen und/oder Polypropylenglykolen eines Molekulargewichts von jeweils 400 bis 2000 einsetzt.

**8.** Verfahren nach den Ansprüchen 5 bis 7, dadurch gekennzeichnet, daß man die Vernetzer in einer Menge von 0,2 bis 5 Gew.-%, bezogen auf Maleinsäureanhydrid, einsetzt.

**9.** Verfahren nach den Ansprüchen 2 bis 8, dadurch gekennzeichnet, daß man die Polymerisationsinitiatoren in einer Menge von 5 bis 16 Gew.-%, bezogen auf Maleinsäureanhydrid, bei der Polymerisation einsetzt.

**10.** Verfahren nach den Ansprüchen 2 bis 9, dadurch gekennzeichnet, daß man als Polymerisationsinitiatoren tert. Butyl-per-2-ethylhexanoat, tert.-Butylperpivalat, tert.-Butylperbenzoat oder deren Mischungen einsetzt.

**11.** Verfahren nach den Ansprüchen 2 bis 9, dadurch gekennzeichnet, daß man als Polymerisationsinitiator tert.-Butylpermaleinat einsetzt.

**12.** Verwendung der geringfügig vernetzten, wasserlöslichen Polymaleinsäure nach Anspruch 1 als Wasserbehandlungsmittel zur Verminderung der Kesselsteinabscheidung und Wasserhärteausscheidung in wasserführenden Systemen.

## Claims

1. A lightly crosslinked, water-soluble polymaleic acid which is obtainable by polymerization of maleic anhydride with from 0.1 to 10% by weight, based on maleic anhydride, of a crosslinking agent containing 2 or more unconjugated ethylenically unsaturated double bonds in an aromatic hydrocarbon at a maleic anhydride concentration of from 20 to 80% by weight at from 60 to 200 °C in the absence of water and in the presence of from 1 to 20% by weight, based on maleic anhydride, of a peroxyester derived from a saturated $C_1-C_{18}$- or ethylenically unsaturated $C_3$-$C_{18}$-carboxylic acid or of tert-butyl perbenzoate or 2,5-dimethylhexane 2,5-diperbenzoate, and hydrolysis of the polymer containing anhydride groups to give lightly crosslinked polymaleic acid having a Fikentscher K value of from 7 to 20 (measured at 25 °C in aqueous solution at pH 7 as the sodium salt and at a polymer concentration of 5% by weight).

2. A process for the preparation of a lightly crosslinked, water-soluble polymaleic acid, which comprises polymerizing maleic anhydride with from 0.1 to 10% by weight, based on maleic anhydride, of a crosslinking agent containing 2 or more unconjugated ethylenically unsaturated double bonds in an aromatic hydrocarbon at a maleic anhydride concentration of from 20 to 80% by weight at from 60 to 200 °C in the absence of water and in the presence of from 1 to 20% by weight, based on maleic anhydride, of a peroxyester derived from a saturated $C_1$-$C_{18}$- or ethylenically unsaturated $C_3$-$C_{18}$-carboxylic acid or of tert-butyl perbenzoate or 2,5-dimethylhexane 2,5-diperbenzoate and then hydrolyzing the polymer.

3. A process as claimed in claim 2, wherein the polymerization is carried out in benzene, toluene, xylene, ethylbenzene, diethylbenzene, isopropylbenzene, diisopropylbenzene or a mixture of these at from 80 to 150 °C in the presence of a peroxyester derived from a saturated $C_4$-$C_{10}$-carboxylic acid.

4. A process as claimed in claim 2 or 3, wherein the polymerization initator is used in an amount of from 5 to 16% by weight, based on maleic anhydride.

5. A process as claimed in any of claims 2 to 4, wherein the crosslinking agent used is a diacrylate or dimethacrylate of a dihydric or polyhydric saturated alcohol, a diacrylate or dimethacrylate of a polyethylene glycol or polypropylene glycol having a molecular weight in each case of from 200 to 9,000, a vinyl ester of an ethylenically unsaturated $C_3$-$C_6$-carboxylic acid, a vinyl ester of a saturated carboxylic acid containing 2 or more carboxyl groups, a di- or polyvinyl ether of a dihydric or polyhydric alcohol, an allyl ester of an ethylenically unsaturated carboxylic acid, an allyl ether of a polyhydric alcohol, methylenebisacrylamide, methylenebismethacrylamide, divinylethyleneurea, divinylpropyleneurea, divinylbenzene, divinyldioxane or a mixture of these.

6. A process as claimed in claim 5, wherein the crosslinking agent used is a diacrylate or dimethacrylate of a dihydric saturated alcohol.

7. A process as claimed in claim 5, wherein the crosslinking agent used is a diacrylate or dimethacrylate of a polyethylene glycol and/or a polypropylene glycol having a molecular weight in each case of from 400 to 2,000.

8. A process as claimed in any of claims 5 to 7, wherein the crosslinking agent is used in an amount of from 0.2 to 5% by weight, based on maleic anhydride.

9. A process as claimed in any of claims 2 to 8, wherein the polymerization initiator is used in the polymerization in an amount of from 5 to 16% by weight, based on maleic anhydride.

10. A process as claimed in any of claims 2 to 9, wherein the polymerization initiator used is tert-butyl per-2-ethylhexanoate, tert-butyl perpivalate, tert-butyl perbenzoate or a mixture of these.

11. A process as claimed in any of claims 2 to 9, wherein the polymerization initiator used is tert-butyl

permaleate.

**12.** Use of the lightly crosslinked, water-soluble polymaleic acid of claim 1 as water treatment agent for reducing boiler scale and hard water deposits in water-conveying systems.

**Revendications**

**1.** Acide polymaléique peu réticulé soluble dans l'eau qui est obtenu par polymérisation d'anhydride maléique avec 0,1 a 10% en poids, par rapport à l'anhydride maléique, d'un réticulant contenant au moins deux doubles liaisons à insaturation éthylénique non conjuguées, dans un hydrocarbure aromatique à une concentration de l'anhydride maléique de 20 à 80% en poids et à des températures de 60 à 200 °C, en l'absence d'eau et en présence de 1 à 20% en poids, par rapport à l'anhydride maléique, d'un peroxyester qui dérive d'acides carboxyliques en $C_7$-$C_{18}$ saturés ou d'acides carboxyliques en $C_3$-$C_{18}$ à insaturation éthylénique, ou de perbenzoate de t-butyle ou de 2,5-diperbenzoate de 2,5-diméthylhexane, et par hydrolyse du polymère contenant des groupements anhydride en acide polymaléique peu réticule ayant une valeur K selon Fikentscher de 7 à 20 (mesurée à 25 °C en solution aqueuse à pH 7 sous forme du sel de Na et à une concentration en polymère de 5% en poids).

**2.** Procédé de préparation d'acide polymaléique peu réticulé soluble dans l'eau, caractérise en ce qu'on polymérise de l'anhydride maléique avec 0,1 à 10% en poids, par rapport à l'anhydride maléique, d'un réticulant contenant au moins deux doubles liaisons à insaturation ethylénique non conjuguées dans un hydrocarbure aromatique à une concentration de l'anhydride maléique de 20 à 80% en poids et à des températures de 60 à 200 °C, en l'absence d'eau et en présence de 1 à 20% en poids, par rapport à l'anhydride maléique, d'un peroxyester qui dérive d'acides carboxyliques en $C_1$-$C_{18}$ saturés ou d'acides carboxyliques en $c_3$-$C_{18}$ à insaturation éthylénique, ou de perbenzoate de t-butyle ou de 2,5-diperbenzoate de 2,5-diméthylhexane et on hydrolyse le polymère résultant.

**3.** Procédé selon la revendication 2, caractérisé en ce qu'on effectue la polymérisation dans le benzène, le toluène, le xylène, l'éthylbenzène, le diéthylbenzène, l'isopropylbenzène, le diisopropylbenzène ou leurs mélanges, à des températures de 80 à 150 °C en présence de peroxyesters qui dérivent d'acides carboxyliques en $C_4$ à $C_{10}$ saturés.

**4.** Procédé selon les revendications 2 ou 3, caractérisé en ce qu'on utilise les initiateurs de polymérisation à raison de 5 à 16% en poids par rapport à l'anhydride maléique.

**5.** Procédé selon les revendications 2 à 4, caractérisé en ce qu'on utilise comme réticulant des diacrylates ou des diméthacrylates d'alcools saturés au moins divalents, des diacrylates ou des diméthacrylates de polyéthylèneglycols ou de polypropylèneglycols ayant des poids moléculaires de 200 à 9000, des esters vinyliques d'acides carboxyliques en $C_3$ à $C_6$ à insaturation éthylénique, des esters vinyliques d'acides carboxyliques saturés contenant au moins 2 groupements carboxy, des di- et polyvinyléthers d'alcools au moins divalents, des esters allyliques d'acides carboxyliques à insaturation ethylénique, des éthers allyliques d'alcools multivalents, du méthylènebisméthacrylamide, de la divinyléthylène-urée, de la divinylpropylène-urée, du divinylbenzène, du divinyldioxanne ou leurs mélanges.

**6.** Procédé selon la revendication 5, caractérisé en ce qu'on utilise comme reticulant des diacrylates ou des diméthacrylates d'alcools saturés divalents.

**7.** Procédé selon la revendication 6, caractérisé en ce qu'on utilise comme reticulant des diacrylates ou des diméthacrylates de polyéthvlèneglycols et/ou de polypropylèneglycols d'un poids moléculaire de 400 à 2000.

**8.** Procédé selon les revendications 5 à 7, caractérise en ce qu'on utilise le réticulant à raison de 0,2 à 5% en poids par rapport à l'anhydride maléique.

**9.** Procédé selon les revendications 2 à 8, caractérisé en ce qu'on utilise dans la polymérisation les initiateurs de polymérisation à raison de 5 à 16% en poids par rapport à l'anhydride maléique.

10. Procédé selon les revendications 2 à 8, caractérisé en ce qu'on utilise comme initiateurs de polymérisation du per-2-éthylhexanoate de tert.-butyle, du perpivalate de tert.-butyle, du perbenzoate de tert.-butyle ou leurs mélanges.

11. Procédé selon les revendications 2 à 9, caractérisé en ce qu'on utilise comme initiateur de polymérisation du permaléate de tert.-butyle.

12. Utilisation de l'acide polymaléique soluble dans l'eau peu réticulé selon la revendication 1 comme agent de traitement de l'eau pour la réduction du dépôt d'incrustations dans les chaudières et l'adoucissement de l'eau dans des systèmes transporteurs d'eau.